# EUROPÄISCHE PATENTANMELDUNG

(11) **EP 2 677 164 A1**
(43) Veröffentlichungstag der Anmeldung: **25.12.2013**
(21) Anmeldenummer: 13002851.7
(22) Anmeldetag: 03.06.2013
(51) Int. Cl.: F03B 13/18, F03B 13/22

(54) **Wellenenergiekonverter, zugehöriges Betriebsverfahren und Steuereinrichtung**

(30) Priorität: 19.06.2012 DE 102012012055
(71) Anmelder: ROBERT BOSCH GMBH, 70442 Stuttgart (DE)
(72) Erfinder: Hagemann, Benjamin, 22851 Norderstedt (DE); Scharmann, Nik, 74321 Bietigheim-Bissingen (DE); Hilsch, Michael, 70192 Stuttgart (DE); Nitzsche, Johannes, 22339 Hamburg (DE); Poddey, Alexander, 75446 Wiernsheimm (DE); Houis, Nicolas, 74321 Bietigheim-Bissingen (DE); Reimer, Stefan, 10437 Berlin (DE); Perschall, Markus, 63743 Aschaffenburg (DE); Behrendt, Jasper, 22605 Hamburg (DE); Kamizuru, Yukio, 52064 Aachen (DE)
(74) Vertreter: Wiesmann, Stephan

(57) **Zusammenfassung**

Die Erfindung betrifft einen Wellenenergiekonverter (1) mit einem Rotor (2, 3, 4), der zur Umwandlung einer Wellenbewegung eines Gewässers, in dem der Wellenenergiekonverter (1) angeordnet ist, in eine Rotationsbewegung des Rotors (2, 3, 4) eingerichtet ist, wobei eine mittlere Dichte wenigstens einer rotierenden Komponente des Rotors (2, 3, 4) eingestellt werden kann und/oder geringer ist als die mittlere Dichte des den Rotor in dem Gewässer umgebenden Fluids. Eine entsprechende Steuereinrichtung und ein Betriebsverfahren sind ebenfalls Gegenstand der Erfindung.

## Beschreibung

Die Erfindung betrifft einen Wellenenergiekonverter mit wenigstens einem Rotor, der zur Umwandlung einer Wellenbewegung in eine Rotationsbewegung des wenigstens einen Rotors eingerichtet ist, ein Verfahren zum Betreiben eines derartigen Wellenenergiekonverters sowie eine entsprechende Steuereinrichtung.

### Stand der Technik

Zur Umwandlung von Energie aus Wasserbewegungen in Gewässern in nutzbare Energie ist eine Reihe unterschiedlicher Vorrichtungen bekannt. Eine Übersicht hierzu gibt beispielsweise G. Boyle, "Renewable Energy", 2. Aufl., Oxford University Press, Oxford 2004. Derartige Vorrichtungen werden im Rahmen dieser Anmeldung als "Wellenenergiekonverter" bezeichnet.

In Wellenenergiekonvertern kann der Wasserbewegung die Energie auf unterschiedliche Weise entnommen werden. So sind beispielsweise auf der Wasseroberfläche schwimmende Bojen bzw. Schwimmkörper bekannt, durch deren Heben und Senken ein Lineargenerator angetrieben wird. Bei einem anderen Maschinenkonzept wird am Meeresboden ein flächiges Widerstandselement angebracht, das durch die Wasserbewegung hin und her gekippt wird. Die Bewegungsenergie wird in einem Generator beispielsweise in elektrische Energie umgewandelt.

Im Rahmen der vorliegenden Erfindung sind insbesondere Wellenenergiekonverter von Interesse, die mit ihren bewegten Teilen unter der Wasseroberfläche angeordnet sind und die eine dort vorliegende Wellenorbitalbewegung ausnutzen.

Die Wellenorbitalbewegung kann mittels Rotoren in eine Rotationsbewegung umgesetzt werden. Hierzu können Rotoren mit Kopplungskörpern, beispielsweise in Form von Auftriebsprofilen und/oder Flettnerrotoren, verwendet werden. Ein derartiges System ist in der US 2010/0150716 A1 offenbart.

Der Rotor mit seinen Kopplungskörpern soll vorteilhafterweise weitgehend wellensynchron, d.h. mit einer mittleren Drehgeschwindigkeit, die der Wellenorbitalbewegung entspricht oder proportional hierzu ist, orbitieren. Entspricht beispielsweise die Rotationsfrequenz des Rotors der Wellenfrequenz, ergeben sich weitgehend stationäre Anströmbedingungen an den Kopplungskörpern, die zu einem weitgehend kontinuierlichen Drehmoment an der Rotorwelle führen. Dieses kann direkt in einen Generator gespeist werden. Übermäßige mechanische Belastungen und/oder Ungleichmäßigkeiten in der Ausgangsleistung des Wellenenergiekonverters werden hierdurch vermieden.

Insbesondere im offenen Meer existieren jedoch sehr unterschiedliche Wellenzustände. Hierzu gehören neben sogenannten Altseen, bei denen die Wellen sehr regelmäßig auftreten, auch Wellenzustände, bei denen sich die Wellencharakteristik durch Überlagerung verschiedener Wellen kontinuierlich ändert. Der erste Wellenzustand wird im Rahmen dieser Anmeldung als "monochromatisch", der zweite Wellenzustand als "multichromatisch" bezeichnet. Vollständig monochromatische Wellenzustände kommen in der Natur kaum vor, so dass unter den Begriff "monochromatisch" auch Wellen mit einer gewissen, jedoch geringen, Multichromatik fallen.

Wenngleich sich die Wellenzustände in der Regel nicht schlagartig ändern und zudem relativ gut prädizierbar sind, kann in der Praxis die Rotationsgeschwindigkeit eines entsprechenden Rotors häufig nicht hinreichend rasch angepasst werden. Dies gilt insbesondere für multichromatische Wellenzustände.

Die Erfindung will daher eine Möglichkeit schaffen, die Synchronisierbarkeit eines Wellenenergiekonverters auch bei multichromatischen Wellenzuständen zu verbessern.

### Offenbarung der Erfindung

Erfindungsgemäß werden ein Wellenenergiekonverter mit wenigstens einem Rotor, der zur Umwandlung einer Wellenbewegung in eine Rotationsbewegung des wenigstens einen Rotors eingerichtet ist, ein Verfahren zum Betreiben eines derartigen Wellenenergiekonverters sowie eine entsprechende Steuereinrichtung mit den Merkmalen der unabhängigen Patentansprüche vorgeschlagen. Vorteilhafte Ausgestaltungen sind jeweils Gegenstand der Unteransprüche sowie der nachfolgenden Beschreibung.

### Vorteile der Erfindung

Die vorliegende Erfindung beruht auf der Erkenntnis, dass für (weitgehend) monochromatische Wellenzustände ein hohes Rotorträgheitsmoment eines Wellenenergiekonverters vorteilhaft ist, da dieses stabilisierend auf den Rotor wirkt. Für multichromatische Wellenzustände erscheint jedoch ein möglichst geringes Rotorträgheitsmoment von Vorteil, da hier die Drehgeschwindigkeit häufig angepasst werden muss.

Die Variation der Drehgeschwindigkeit soll im Idealfall lediglich durch eine entsprechende Variation des Generatormoments, also eines (bremsenden) Gegenmoments zu dem durch die Wellenbewegung erzeugten Rotormoment, erreicht werden. Ist das Rotorträgheitsmoment hoch, so kann jedoch die erforderliche Beschleunigung des Rotors unter Umständen nicht alleine durch eine Reduktion des Generatormoments - und damit einen entsprechend überwiegenden Beitrag des (antreibenden) Rotormoments - erreicht werden. In diesem Fall müssten der Rotor zusätzlich durch den Generator angetrieben werden, was energetisch nachteilig ist, insbesondere bei hoher Trägheit.

Bisher wurde davon ausgegangen, dass ein weitgehend neutraler hydrostatischer Auftrieb der Rotorkomponenten im Wasser besonders vorteilhaft ist. Dies wurde insbesondere für Rotoren als wichtig angesehen, deren bewegliche Komponenten nicht gleichmäßig um die Drehachse verteilt angeordnet sind, da hier ansonsten Vorzugspositionen auftreten würden, die den Betrieb stören könnten. Insbesondere bei größeren Rotordurchmessern von beispielsweise 10 m bis 30 m und der Verwendung von größeren Auftriebsprofilen mit Spannweiten im Bereich von mehr als 10 m und einer Sehnenlänge von 1 m bis 8 m ergeben sich bei neutralem hydrostatischem Auftrieb unter anderem aufgrund der relativ großen rotierenden Massen jedoch erhebliche Rotorträgheitsmomente, die einem effizienten Betrieb mit einer regelmäßigen Anpassung der Drehgeschwindigkeit in multichromatischen Wellenzuständen entgegenstehen. Darüber hinaus werden in bisherigen Systemen nicht unerheblich große hydrostatische Auftriebskörper benötigt, um den Rotor unter der Wasseroberfläche gegen ein Verankerungssystem zu verspannen und so beispielweise das auftretende Drehmoment abzustützen.

Die Erfindung schlägt entgegen der zuvor genannten bisherigen Auffassung die Verwendung von Rotorkomponenten - insbesondere von Auftriebsprofilen oder von Flettnerrotoren, Hebelarmen und dergleichen - vor, welche eine geringere mittlere Dichte als das umgebende Wasser, z.B. Seewasser, aufweisen. Hierdurch wird das Rotorträgheitsmoment gegenüber Rotoren mit Komponenten mit neutralem Auftrieb und/oder größerer mittlerer Dichte als der des umgebenden Fluids entsprechend reduziert, was zu einer deutlich größeren Verstelldynamik und damit Adaptibilität des Rotors an wechselnde, insbesondere multichromatische, Wellenzustände führt.

Darüber hinaus fungieren die derart vorgesehenen, optimierten Komponenten als hydrostatische Auftriebskörper, was den Bedarf an zusätzlichen hydrostatischen Auftriebskörpern reduziert und damit Systemkosten spart. Zudem wird die Maschine durch die Einsparung von weiteren hydrostatischen Auftriebskörpern insgesamt kleiner und damit hydrodynamisch transparenter.

Erfindungsgemäß ist damit ein Rotor für ein rotierendes Wellenkraftwerk vorgesehen, bei dem die Auftriebsprofile und/oder andere Bestandteile zumindest zeitweise eine geringere mittlere Dichte als Seewasser aufweisen. Dabei sind insbesondere die Komponenten entsprechend ausgebildet, die einen großen radialen Abstand zur Rotorachse aufweisen.

Eine geringere mittlere Dichte kann beispielsweise durch einen schaligen Aufbau, falls erforderlich durch Verstrebungen unterstützt, erreicht werden. Die eingeschlossenen Luftvolumina führen zu einer deutlichen Verringerung der mittleren Dichte. Alternativ oder zusätzlich können entsprechende Hohlräume auch ausgeschäumt werden, vorzugsweise mit einem geschlossenporigen Schaum, um sie gegen eindringendes Wasser zu schützen.

Zur Erreichung einer geringen mittleren Dichte können vorteilhafterweise auch faserverstärkte Kunststoffe zum Einsatz kommen. Hierbei können die Auftriebsprofile vollständig aus diesen Materialien gefertigt werden, wie dies beispielsweise aus dem Bereich der Windenergie bekannt ist. Aufgrund der insbesondere im Bereich der Wellenenergie auftretenden hohen mechanischen Lasten sind jedoch auch Kombinationen aus einem tragenden Rahmen, beispielsweise aus Metallstreben, mit einer Verkleidung aus vorzugsweise faserverstärkten Kunststoffen oder anderen Materialien, wie z.B. Textilgeweben, vorteilhaft.

Vorteilhafterweise wird beim Einsatz von Komponenten mit gegenüber Wasser reduzierter mittlerer Dichte im Rotor ein weitgehend symmetrisch aufgebauter Rotor eingesetzt. Unter "Symmetrie" sei dabei verstanden, dass die entsprechenden Komponenten weitgehend gleichmäßig um die Rotationsachse des Rotors verteilt angeordnet sind. Durch eine derartige Symmetrie wird eine Vorzugslage des Rotors vermieden, weil Massen- und Auftriebsschwerpunkt mit der Rotationsachse zusammenfallen. Diese Voraussetzung ist beispielsweise bei einem Rotor mit zwei um 180° versetzt angeordneten Auftriebsprofilen oder drei um 120° versetzt angeordneten Auftriebsprofilen usw. weitgehend erfüllt. Auch andere Anordnungen können vorteilhaft sein.

Würde der Rotor im Gegensatz dazu nur ein Auftriebsprofil mit geringerer Dichte aufweisen, würde die Rotordrehung durch periodische Kräfte durch dessen hydrostatischen Auftrieb und/oder Gewichtskraft überlagert. Dies kann bis hin zu einer Nichtfunktionalität des Rotors führen, nämlich für den Fall, dass während der Abwärtsbewegung die hydrostatischen Auftriebskräfte größer sind als die durch den hydrodynamischen Auftrieb an diesem einen Auftriebsprofil erzeugten Kräfte.

Abweichungen von der Symmetrieforderung sind in gewissem Umfang möglich und können durch eine Steuerung/Regelung eines entsprechenden Wellenenergiekonverters kompensiert werden. Derartige Abweichungen werden insbesondere dadurch verursacht, dass unterschiedliche Auftriebsprofile eines Rotors häufig mit unterschiedlichen Anstellwinkeln gegenüber einer Rotortangente angestellt ("unsymmetrisch gepitcht") werden. Darüber hinaus kann die Geometrie der Flügel aufgrund von geometrischen Transformationen zur Anpassung an eine Kreisbewegung voneinander abweichen. Zum Ausgleich derartiger Unterschiede zumindest in einem gewissen Umfang können vorteilhafterweise Ausgleichsmassen, Auftriebs- und/oder Ausgleichskörper verwendet und am Rotor bzw. den Auftriebsprofilen angebracht werden.

Bei einer besonders vorteilhaften Ausführungsform kann die mittlere Dichte des Rotors oder einer entsprechenden Komponente im Betrieb geändert werden. Wie zuvor erläutert, kann für eher monochromatische Wellenzustände ein hohes Rotorträgheitsmoment vorteilhaft sein, während durch eine Reduktion des Rotorträgheitsmoments im Wesentlichen ein multichromatischer Betrieb optimiert wird. In erheblichem Umfang kann die Änderung der mittleren Dichte durch Ein- und Auspumpen von Seewasser in Hohlräume der Rotorkomponenten (insbesondere der Kopplungskörper) oder Umpumpen zwischen Komponenten vorgenommen werden. Entsprechende Hohlräume können dabei auch beispielsweise gekammert ausgebildet sein. Die hierbei vorgesehenen Kammern können auch teilweise ausgeschäumt sein und/oder durch entsprechende Einrichtungen einzeln geflutet oder gelenzt werden, wie bei Flugzeugtanks bekannt. Die Dichte von Meerwasser liegt (abhängig vom Salzgehalt) zwischen 1020 und 1030 kg/m³. Die in Frage kommenden Elemente weisen daher eine entsprechend geringere Dichte auf, die auch an die jeweilige Salinität angepasst werden kann. Da sich Wellenzustände nicht schlagartig ändern, erscheint es vorteilhaft, bei Vorliegen eines weitgehend monochromatischen Wellenzustands das Rotorträgheitsmoment zu erhöhen. Bei Auftreten von multichromatischen Wellen kann das Trägheitsmoment durch Auspumpen wieder reduziert werden. Vorzugsweise erfolgt das Ein-und Auspumpen durch geeignete Filter, um den Innenraum der Rotorkomponenten gegen Bewuchs oder Verschmutzung zu schützen. Auch der durch vollständiges Leerpumpen der Komponenten, z.B. der Auftriebsprofile, erhöhte hydrostatische Auftrieb dazu genutzt werden, um den Wellenenergiekonverter beispielsweise zur Instandsetzung oder Wartung an die Wasseroberfläche zu bringen.

Durch die vorgeschlagene Änderung des Rotorträgheitsmoments wird naturgemäß auch der hydrostatische Auftrieb des Rotors verändert. Diese Änderung kann im Betrieb vorteilhafterweise durch eine entsprechende Anpassung von weiteren hydrostatischen Auftriebskörpern ausgeglichen werden.

Eine besonders vorteilhafte Ausführungsform umfasst ferner Mittel, beispielsweise in Form entsprechender Leitungen und/oder Pumpen, die dafür eingerichtet sind, Fluid gezielt und dosiert zwischen Komponenten des Wellenenergiekonverters, insbesondere zwischen rotierenden und statischen Komponenten, hin- und her zu pumpen. Hierdurch erfolgt vorteilhafterweise keine Änderung der Gesamtmasse bzw. des Summenauftriebs. Es werden keine Fremdkörper, Verschmutzungen, Tiere u.ä. in die Maschine eingetragen. Gleichzeitig erlaubt dies jedoch die erfindungsgemäße Trägheitsbeeinflussung.

Zu Merkmalen und Vorteilen des erfindungsgemäß ebenfalls vorgeschlagenen Verfahrens sei auf die obigen und die nachfolgenden Erläuterungen verwiesen.

Die Erfindung und bevorzugte Ausgestaltungen werden nachfolgend unter Bezugnahme auf die beigefügten Zeichnungen weiter erläutert.

### Kurze Beschreibung der Zeichnungen

- Figur 1: zeigt Geschwindigkeiten und Beschleunigungen von Wasserteilchen unter der Oberfläche eines wellig bewegten Gewässers in schematischer Darstellung.
- Figur 2: zeigt Wellenorbitalbewegungen unter der Oberfläche eines wellig bewegten Gewässers im Flach- und Tiefwasser in schematischer Darstellung.
- Figur 3: zeigt Wellendiagramme monochromatischer und multichromatischer Wellenzustände in einem wellig bewegten Gewässer.
- Figur 4: zeigt einen Wellenenergiekonverter gemäß einer Ausführungsform der Erfindung in einem wellig bewegten Gewässer in schematischer Darstellung.
- Figur 5: zeigt an dem Wellenenergiekonverter gemäß Figur 4 angreifende und resultierende Kräfte in schematischer Darstellung.

In den Figuren tragen gleiche oder gleich wirkende Elemente identische Bezugszeichen. Auf eine wiederholte Erläuterung wird verzichtet.

### Ausführungsformen der Erfindung.

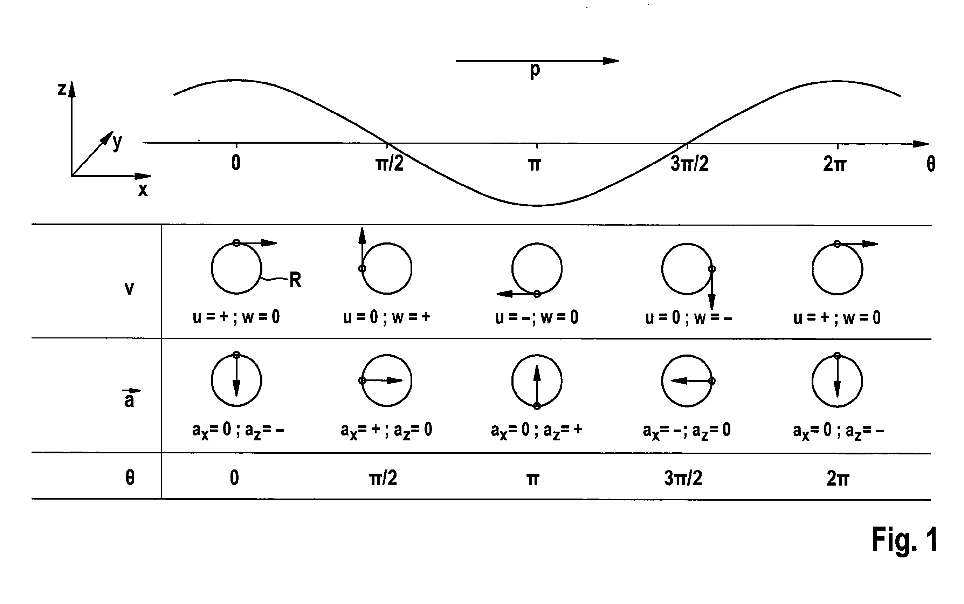

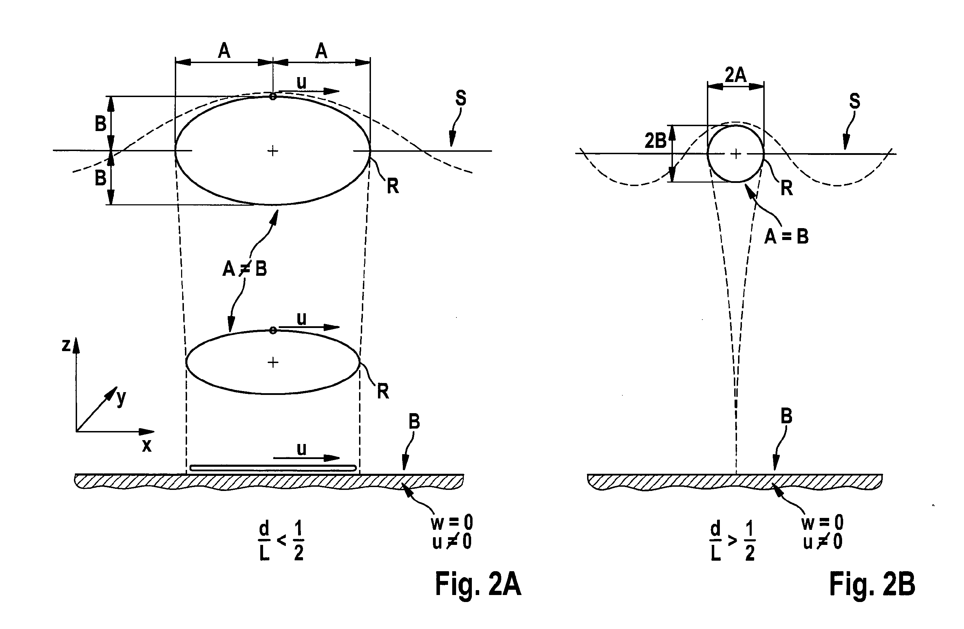

Figur 1 zeigt (lokale) Geschwindigkeiten ν̅ und Beschleunigungen a̅ von Wasserteilchen unter der Oberfläche eines wellig bewegten Gewässers, z.B. im Meer, in Form von horizontalen Komponenten u und vertikalen Komponenten w der lokalen Wasserbewegung sowie der zugehörigen Horizontal-und Vertikalbeschleunigungen aₓ und a_{z}. Hierbei ergeben sich Radial- bzw. Orbitalbahnen R, die, wie in Figur 2 erläutert, im Tiefwasser kreisförmig sind und im Flachwasser zunehmend die Form von Ellipsen annehmen. Die Welle breitet sich in einer Ausbreitungsrichtung p aus und wird vereinfacht als sinusförmig angenommen.

Das in Figur 1 angegebene Koordinatensystem wird auch in der Figur 2 verwendet. Die Koordinatenachse x entspricht der Wellenausbreitungsrichtung parallel zur Wasseroberfläche, die Koordinatenachse z der Lotrechten zur Wasseroberfläche. Die Koordinatenachse y verläuft parallel zur Wasseroberfläche und senkrecht zur Wellenausbreitungsrichtung.

Unter einem Wellenberg (0 - π) bewegt sich die Gesamtheit der Wasserteilchen in Richtung der Wellenausbreitungsrichtung p (es liegt somit nur eine horizontale Bewegungskomponente u vor), und unter einem Wellental (1 - π) dieser entgegen (nachfolgend als -u bezeichnet). Die vertikalen Bewegungskomponenten betragen hier Null. Bei π/2 und 3π/2, also den Nulldurchgängen einer entsprechenden Wellenfunktion, existiert keine Horizontalbewegung; die Wasserteilchen bewegen sich ausschließlich nach oben (Bewegungskomponente w) bzw. unten (Bewegungskomponente -w). Die Bewegung kann jedoch von einer Strömung überlagert sein.

Figur 2 zeigt in Teilfigur 2A die Radial- bzw. Orbitalbahnen R im Flachwasser und in Teilfigur 2B im Tiefwasser. Im Flachwasser (Teilfigur 2A) übersteigen die horizontalen Komponenten u betragsmäßig die vertikalen Komponenten w der lokalen Wasserbewegung. Die Horizontalerstreckung (2 - A) der Orbitalbahnen R ist stets größer als deren Vertikalerstreckung (2 - B), somit gilt A ≠ B. Am Boden des Gewässers beträgt die vertikale Komponente w der lokalen Wasserbewegung Null, es liegt nur noch eine Horizontalbewegung vor.

Im Tiefwasser (Teilfigur 2B) gilt hingegen A = B. Die Radien verkleinern sich jedoch ausgehend von der mittleren Wasseroberfläche S zum Boden B des Gewässers.

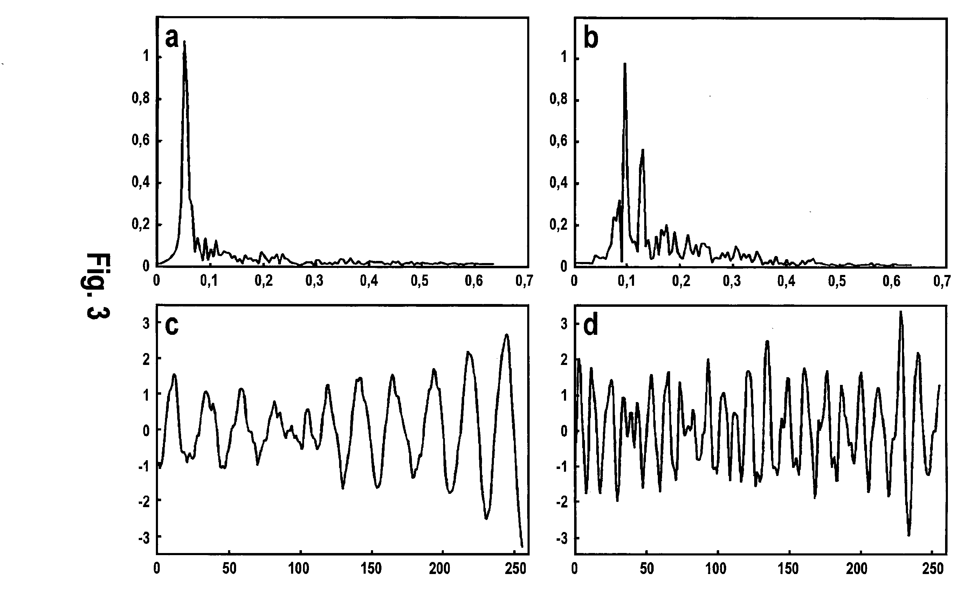

In Figur 3 sind Wellendiagramme monochromatischer und multichromatischer Wellenzustände in einem wellig bewegten Gewässer dargestellt. In den Diagrammen a und b ist dabei jeweils eine Amplitude auf der Ordinate gegenüber einer Wellenfrequenz in Hz auf der Abszisse aufgetragen. In den Diagrammen c und d ist eine Wellenhebung bzw. -senkung in m für eine feste Position ("Seegang") auf der Ordinate gegenüber einer Zeit in s auf der Abszisse aufgetragen.

Dargestellt ist in den linken Diagrammen a und c ein weitgehend monochromatischer Wellenzustand, die rechten Diagramme b und d betreffen hingegen einen multichromatischen Wellenzustand, der sich aus der Überlagerung zweier Hauptfrequenzen sowie einer Beimischung weiterer Frequenzanteile ergibt.

Für den in den linken Diagrammen a und c dargestellten Fall mit nur geringen Schwankungen der Periodendauer ist ersichtlich, dass sich bei entsprechend angepasster - nämlich leicht schwankender - Drehzahl eines Rotors weitgehend konstante Strömungsbedingungen an den Auftriebsprofilen einstellen werden.

Für den rechts dargestellten Fall (Diagramme b und d) ist dies nicht zu erwarten. Aufgrund der Komplexität des Wellenzustands ergibt sich hier die Notwendigkeit, die Drehgeschwindigkeit des Rotors weitgehend kontinuierlich zu ändern, um Anströmungsbedingungen an den Flügeln zu erzeugen, die ein vortreibendes Moment am Rotor generieren, das mit dem Generator abgegriffen und gewandelt werden kann.

Wie erwähnt, kann für weitgehend monochromatische Wellenzustände ein hohes Rotorträgheitsmoment vorteilhaft sein, da dieses stabilisierend auf den Rotor wirkt. Für multichromatische Zustände erscheint jedoch ein möglichst geringes Rotorträgheitsmoment von Vorteil, da hier die Drehgeschwindigkeit häufig angepasst werden muss.

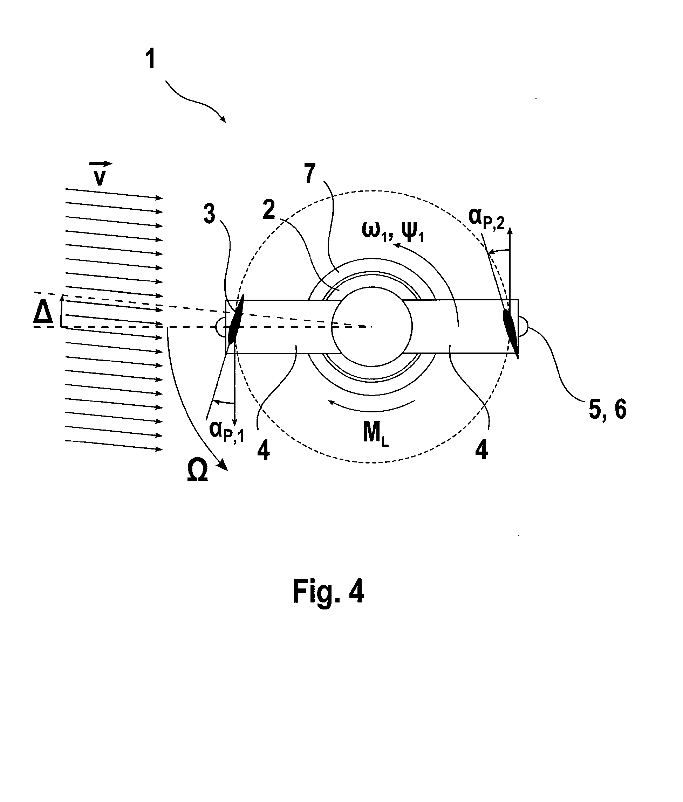

In Figur 4 ist ein Wellenenergiekonverter 1, wie er der vorliegenden Erfindung zugrunde liegen kann, mit einem Gehäuse 7 und einem daran drehbar gelagerten Rotor 2, 3, 4 mit einer Rotorbasis 2 und zwei jeweils über Hebelarme 4 drehfest an der Rotorbasis 2 befestigten Kopplungskörpern 3 dargestellt. Der Rotor 2,3,4 sei unterhalb der Wasseroberfläche eines welligen Gewässers - beispielsweise eines Ozeans - angeordnet. Hierbei sollen beispielsweise Tiefwasserbedingungen vorliegen, bei denen die Orbitalbahnen der Wassermoleküle weitgehend kreisförmig verlaufen. Eine Rotationsachse des Rotors (senkrecht zur Papierebene) sei weitgehend horizontal und weitgehend senkrecht zur Ausbreitungsrichtung der Wellen des welligen Gewässers orientiert. Die Kopplungskörper 3 sind im gezeigten Beispiel als hydrodynamische Auftriebsprofile ausgeführt. Vorzugsweise kann zumindest ein Teil der rotierenden Komponenten des Wellenenergiekonverters 1 zumindest zeitweise eine geringere mittlere Dichte aufweisen als das umgebende Wasser, um, wie erläutert, ein Trägheitsmoment zu minimieren. Dies gilt insbesondere für gleichmäßig um die Rotationsachse verteilte Komponenten des Rotors 2, 3, 4, z.B. in dem Wellenenergiekonverter 1 die Kopplungskörper 3 und/oder die Hebelarme 4, so dass sich keine diesbezügliche Asymmetrie und damit eine Vorzugsposition ergibt.

Die Kopplungskörper 3 sind in einem Winkel von etwa 180° zueinander angeordnet. Vorzugsweise sind die Kopplungskörper 3 in der Nähe ihres Druckpunktes gehaltert, um im Betrieb auftretende Rotationsmomente auf die Kopplungskörper 3 und damit die Anforderungen an die Halterung und/oder die Verstelleinrichtungen zu reduzieren.

Der radiale Abstand zwischen einem Aufhängungspunkt eines Kopplungskörpers 3 und der Rotorachse beträgt 1 m bis 50 m, vorzugsweise 2 m bis 40m und besonders bevorzugt 6 m bis 30 m. Die Sehnenlänge der Kopplungskörper 3 beträgt beispielsweise 1 m bis 8 m. Die Spannweite (senkrecht zur Papierebene) kann beispielsweise 6 m oder mehr betragen. Die Erfindung eignet sich auch zur Verwendung mit zweiseitigen Rotoren oder sogenannten Käfigläufern, bei denen Kopplungskörper 3 mit entsprechender oder angepasster Spannweite jeweils über die erläuterten Hebelarme 4 in Axialrichtung beidseitig an einer Rotorbasis 2 bzw. zwischen zwei Rotorbasen 2 angebracht sind.

Zusätzlich dargestellt sind zwei Verstelleinrichtungen 5 zur Verstellung der Anstell- bzw. Pitchwinkel α_{P},₁ und α_{P},₂ der beiden Kopplungskörper 3 gegenüber der hier senkrecht nach oben bzw. unten gezeichneten Tangente zum Rotor. Die beiden Anstellwinkel α_{P},₁ und α_{P},₂ sind vorzugsweise entgegen gerichtet orientiert und weisen beispielsweise Werte von -20° bis +20° auf. Insbesondere beim Anfahren des Wellenenergiekonverters 1 können jedoch auch größere Anstellwinkel vorgesehen sein. Vorzugweise können die Anstellwinkel α_{P},₁ und α_{P},₂ unabhängig voneinander verstellt werden. Bei den Verstelleinrichtungen kann es sich beispielsweise um elektromotorische Verstelleinrichtungen - vorzugsweise mit Schrittmotoren - und/oder um hydraulische und/oder pneumatische Komponenten handeln.

Den beiden Verstelleinrichtungen 5 kann zudem jeweils eine Sensorik 6 zur Bestimmung der aktuellen Anstellwinkel α_{P},₁ und α_{P},₂ zugeordnet sein. Eine weitere, nicht dargestellte Sensorik kann den Rotationswinkel der Rotorbasis 2 gegenüber dem Gehäuse 7 bestimmen.

Die Erfindung eignet sich auch für Anlagen ohne Verstelleinrichtungen 5 zur Verstellung der Anstell- bzw. Pitchwinkel α_{P},₁ und α_{P},₂ und/oder entsprechende Sensorik und/oder für auf anderen Funktionsprinzipien beruhende Wellenenergiekonverter, beispielsweise Flettner-Rotoren. Bei Flettner-Rotoren handelt es sich bekanntermaßen um Antriebe in Form eines einer Strömung ausgesetzten, rotierenden Zylinders, der durch den Magnus-Effekt eine Kraft quer zur Anströmung generiert. Beispielsweise handelt es sich hierbei um lotrecht oder waagrecht und senkrecht zur Strömungsrichtung angeordnete, durch einen Antrieb in eine rotierende Bewegung versetzbare Zylinder aus Blech, vorzugsweise mit Endscheiben. Durch eine Beeinflussung der Rotationsgeschwindigkeit kann die generierte Kraft beeinflusst werden.

Der Wellenenergiekonverter 1 wird von der Orbitalströmung mit einer Anströmungsgeschwindigkeit ν̅(t) angeströmt. Dabei handelt es sich bei der Anströmung um die Orbitalströmung von Meereswellen, deren Richtung sich kontinuierlich mit einer Winkelgeschwindigkeit Ω ändert. Im dargestellten Fall ist die Drehung der Orbitalströmung entgegen dem Uhrzeigersinn orientiert, die dazugehörige Welle breitet sich also von rechts nach links aus. Im monochromatischen Fall ändert sich die Anströmungsrichtung dabei mit der Winkelgeschwindigkeit Ω = 2 π f = const., wobei f die Frequenz der monochromatischen Welle darstellt. In multichromatischen Wellen unterliegt Ω dagegen einer zeitlichen Änderung, Ω = f(t), da die Frequenz f eine Funktion der Zeit ist, f = f(t). Es ist vorgesehen, dass der Rotor 2, 3, 4 synchron zur Orbitalströmung der Wellenbewegung mit einer Winkelgeschwindigkeit ω₁ rotiert, wobei der Begriff der Synchronizität im zeitlichen Mittel zu verstehen ist. Hierbei gilt beispielsweise Ω ≈ ω₁. Ein Wert oder ein Wertebereich für eine Winkelgeschwindigkeit ω₁ des Rotors wird also auf Grundlage einer Winkelgeschwindigkeit Ω der Orbitalströmung vorgegeben oder an diese angepasst. Hierbei kann eine konstante Regelung oder eine kurzzeitige bzw. kurzfristige Anpassung (z.B. mit einer überlagerten Winkelgeschwindigkeit ω₁) erfolgen.

Zur raschen Anpassung kann erfindungsgemäß vorgesehen sein, die Kopplungskörper 3 und/oder Hebelarme 4 derart auszubilden, dass ihre mittlere Dichte zumindest zeitweise geringer als das umgebende Fluid ist. Hierdurch wird die Trägheit des Rotors 2, 3, 4 verringert.

Durch die Einwirkung der Strömung mit der Anströmungsgeschwindigkeit ν̅ auf die Kopplungskörper wird, wie unten näher erläutert, ein auf den Rotor 2, 3, 4 wirkendes erstes Drehmoment erzeugt. Vorgesehen ist darüber hinaus, dass auf den Rotor 2, 3, 4 ein vorzugsweise veränderbares zweites Drehmoment in Form eines Widerstands, also eines Bremsmoments, oder eines Beschleunigungsmoments aufbringbar ist. Voraussetzung für ein derartiges Moment ist eine in der Maschine integrierte Abstützung (Mooring-System). Bei geringer Rotorträgheit verringert sich der energetische Aufwand für eine Beschleunigung des Rotors durch ein Beschleunigungsmoment. Mittel zur Erzeugung des zweiten Drehmoments sind zwischen der Rotorbasis 2 und dem Gehäuse 7 angeordnet. Vorzugsweise ist dabei vorgesehen, dass es sich bei dem Gehäuse 7 den Ständer eines direktgetriebenen Generators und bei der Rotorbasis 2 um dessen Läufer handelt, dessen Lagerung, Wicklungen etc. nicht dargestellt sind. Hierbei wird das zweite Drehmoment durch das Generatormoment bestimmt. Alternativ dazu können jedoch auch andere Triebstrangvarianten vorgesehen sein, bei denen die Mittel zur Erzeugung des zweiten Drehmoments neben einem Generator auch noch ein Getriebe und/oder hydraulische Komponenten, wie zum Beispiel Pumpen, umfassen. Zusätzlich oder ausschließlich kann auch eine geeignete Bremse vorgesehen sein.

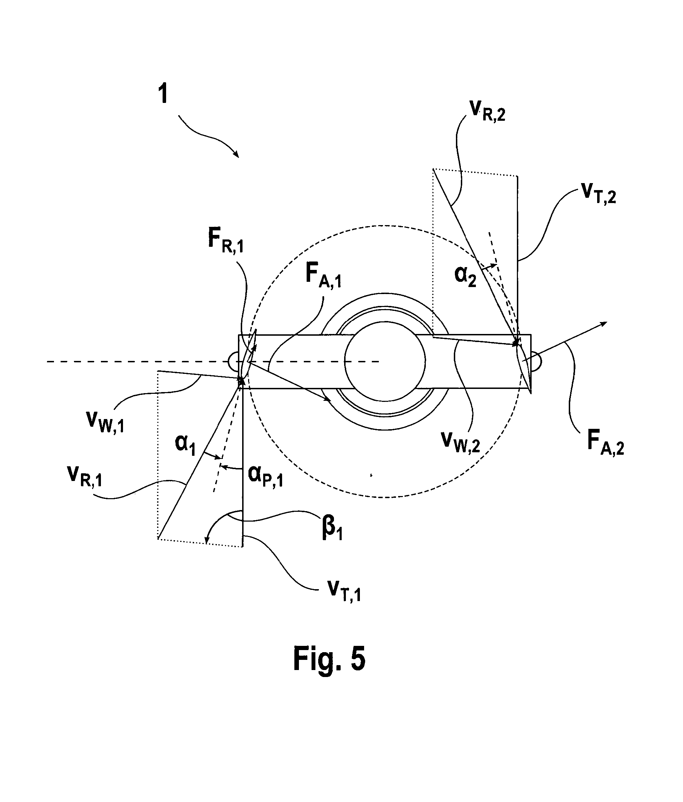

Zwischen der Rotororientierung, die durch eine untere gestrichelte Linie veranschaulicht ist, und die durch die Rotorachse und die Mitte der beiden Verstelleinrichtungen 5 verläuft, und der Richtung der Orbitalströmung, die die durch eine obere gestrichelte Linie veranschaulicht ist, und die durch einen der Geschwindigkeitspfeile ν̅ verläuft, besteht ein Phasenwinkel Δ, dessen Betrag durch die Einstellung des ersten und/oder des zweiten Drehmoments beeinflusst werden kann. Dabei erscheint ein Phasenwinkel von -45° bis 45°, vorzugsweise von -25° bis 25° und besonders bevorzugt von -15° bis 15° zur Erzeugung des ersten Drehmoments als besonders vorteilhaft, da hier bei die Orbitalströmung ν̅ und die Anströmung aufgrund der Eigenrotation v_{R} (siehe Figur 5) weitgehend senkrecht zueinander orientiert sind, was zu einer Maximierung des Rotormoments führt. Unter Einhaltung der geforderten Synchronität gilt Δ ≈ const., wobei auch ein Pendeln um einen Mittelwert von Δ als synchron verstanden wird. Die Darstellung der Kopplungskörper in den Figuren 4 und 5 erfolgt nur beispielhaft zur Definition der unterschiedlichen Maschinenparameter. So können im Betrieb die Anstellwinkel der beiden Kopplungskörper 3 auch entgegengesetzt zur Darstellung ausgeführt sein. Der in Figur 4 linke Kopplungskörper wäre dann nach innen verstellt und der in Figur 4 rechte Kopplungskörper nach außen. Dabei kann entgegen dieser schematischen Darstellung mit ungekrümmten symmetrischen Profilen auch der Einsatz von anderen Profilgeometrien vorgesehen sein, die zudem auch noch in Bezug auf die kreisförmige Bahnlinie angepasst und/oder transformiert sein können.

Im Rahmen der Erfindung können beispielsweise ν̅ und Ω vorherbestimmt werden, so dass eine Vorsteuerung des ersten und/oder zweiten Drehmoments entsprechend durchgeführt werden kann. Das erste Drehmoment wird im Wesentlichen über die die Anstellwinkel α_{P},₁ und α_{P},₂ sowie über den Phasenwinkel Δ zwischen Rotation ω und Orbitalströmung Ω und die resultierende Anströmgeschwindigkeit beeinflusst, das zweite Drehmoment über das vom Generator abgegriffene Moment, welches bspw. über eine Vorgabe des Erregerstroms des Läufers beeinflusst werden kann. Bei Bestimmung monochromatischer Wellenzustände kann die mittlere Dichte der Komponenten des Rotors 2, 3, 4 erhöht, bei Bestimmung multichromatischer Wellenzustände hingegen verringert werden. Dies kann z.B. durch Ein- bzw. Auspumpen von Waser in als Hohlprofile ausgebildete Kopplungskörper 3 erfolgen.

In Figur 5 sind die sich ergebenden Anströmungsverhältnisse und die sich einstellenden Kräfte an den Kopplungskörpern, die zu einem Rotordrehmoment führen, schematisch dargestellt. Dabei wird vereinfachend davon ausgegangen, dass die Strömung über den gesamten Rotorquerschnitt gleichförmig ausgeprägt ist und einen gleichen Betrag und eine gleiche Richtung aufweist. Insbesondere für Rotoren mit großen Radialerstreckungen kann es jedoch gerade bei der dargestellten horizontalen Ausrichtung der Hebelarme 4 dazu kommen, dass sich die verschiedenen Kopplungskörper 3 des Rotors 2,3,4 relativ zur Welle an unterschiedlichen Positionen befinden, was zu einer lokal unterschiedlichen Anströmungsrichtung führt. Dies kann jedoch beispielsweise mit Hilfe einer individuellen Einstellung des jeweiligen Anstellwinkels α_{P,i} ausgeglichen werden.

An dem in der Figur 5 links dargestellten Kopplungskörper sind die lokalen Anströmungen durch die Orbitalströmung v_{w,1} und durch die Eigenrotation v_{T,1}, die als Vektorsumme aus diesen beiden Anströmungen resultierende Anströmgeschwindigkeit v_{R,1} sowie der sich ergebende Anströmwinkel α₁ dargestellt. Abgeleitet sind darüber hinaus die sich ergebenden Auftriebs- und Widerstandskräfte F_{A,1} und F_{R,1} an diesem Kopplungskörper, die sowohl vom Betrag der Anströmgeschwindigkeit v_{T,1} als auch von dem Anströmwinkel α₁ und damit auch vom Anstellwinkel α_{P,1} abhängig und senkrecht bzw. parallel zur Richtung von v_{R,1} orientiert sind. Bezüglich des in der Figur 5 rechts dargestellten Kopplungskörper ist aus Gründen der Übersichtlichkeit nur ein Teil dieser Größen angegeben und mit dem Index 2 versehen.

Für den dargestellten Fall ergibt sich durch die beiden Auftriebskräfte F_{A,1} und F_{A,2} ein Rotordrehmoment entgegengesetzt dem Uhrzeigersinn und durch die beiden Widerstandskräfte F_{w,1} und F_{w,1} (nicht dargestellt) ein betragsmäßig kleineres Rotordrehmoment in entgegengesetzter Richtung (also im Uhrzeigersinn). Die Summe aus beiden Rotordrehmomenten führt zu einer Rotation des Rotors 2, 3, 4, deren Geschwindigkeit durch das verstellbare zweite Drehmoment eingestellt werden kann. Wie erkennbar, wirkt ein signifikanter Anteil der Kräfte radial und sollte durch ein geeignetes Haltesystem abgestützt werden.

Wird eine Synchronität mit Δ ≈ const. erreicht, so ist aus Figur 5 unmittelbar ersichtlich, dass sich für monochromatische Fälle, in denen der Betrag der Strömung v_{w,1} bzw. v_{w,2} und die Winkelgeschwindigkeit Ω weitgehend - unter Berücksichtigung der zuvor erläuterten Tiefen- und Flachwassereffekte - konstant bleiben, die Anströmbedingungen der beiden Kopplungskörper 3 über die Drehung des Rotors nicht ändern. Dies bedeutet, dass mit konstanten Anstellwinkeln α_{P,1} und α_{P,2} ein weitgehend konstantes Rotordrehmoment erzeugt wird, das mit einem konstanten zweiten Drehmoment eines entsprechenden Generators abgegriffen werden kann. Im Fall multichromatischer Wellen ergeben sich hingegen Änderungen, die durch Anpassung der Anstellwinkel und/oder des zweiten Drehmoments berücksichtigt werden können. Eine Anpassung von ω₁ gelingt auf besonders vorteilhafte Weise durch eine geringe Massenträgheit des Rotors.

## Patentansprüche

1. Wellenenergiekonverter (1) mit einem Rotor (2, 3, 4), der zur Umwandlung einer Wellenbewegung eines Gewässers, in dem der Wellenenergiekonverter (1) angeordnet ist, in eine Rotationsbewegung des Rotors (2, 3, 4) eingerichtet ist, wobei eine mittlere Dichte wenigstens einer rotierenden Komponente des Rotors (2, 3, 4) eingestellt werden kann und/oder geringer ist als die mittlere Dichte des den Rotor in dem Gewässer umgebenden Fluids.

2. Wellenenergiekonverter (1) nach Anspruch 1, wobei die wenigstens eine rotierende Komponente eine Rotorbasis (2), ein Hebelarm (4) und/oder wenigstens ein Kopplungskörper (3) des Rotors zur Kopplung mit der Wellenbewegung ist.

3. Wellenenergiekonverter (1) nach Anspruch 1 oder 2, wobei die wenigstens eine rotierende Komponente zwei weitgehend symmetrisch um eine Rotationsachse des Rotors angeordnete Komponenten (2, 3, 4) des Rotors umfasst.

4. Wellenenergiekonverter nach Anspruch 3, der Mittel aufweist, die dazu ausgebildet sind, Unterschiede in der mittleren Dichte der wenigstens zwei gleichmäßig um eine Drehachse des Rotors verteilter Komponenten (2, 3, 4) des Rotors auszugleichen.

5. Wellenenergiekonverter (1) nach einem der vorstehenden Ansprüche, bei dem die wenigstens eine rotierenden Komponente (2, 3, 4) des Rotors in Schalenbauweise, insbesondere wenigstens teilweise hohl, ausgebildet ist.

6. Wellenenergiekonverter (1) nach Anspruch 5, bei dem die wenigstens eine in Schalenbauweise hergestellte Komponente (2, 3, 4) eine Schale aus einem Verbund- und/oder Textilwerkstoff und/oder in ihrem Inneren verstärkende Verstrebungen und/oder eine Ausschäumung aufweist.

7. Wellenenergiekonverter (1) nach Anspruch 5 oder 6, der Mittel aufweist, die dazu ausgebildet sind, um ein Fluid, insbesondere Wasser, in die wenigstens eine in Schalenbauweise hergestellte Komponente (2, 3, 4) ein- oder auszupumpen, um deren mittlere Dichte einzustellen.

8. Wellenenergiekonverter (1) nach Anspruch 7, bei der die Mittel, um das Fluid in die wenigstens eine in Schalenbauweise hergestellte Komponente (2, 3, 4) ein- oder auszupumpen, wenigstens eine Filtereinrichtung umfassen, um zumindest das eingepumpte Fluid zu filtern.

9. Wellenenergiekonverter (1) nach Anspruch 7 oder 8, bei der die Mittel, um das Fluid in die wenigstens eine in Schalenbauweise hergestellte Komponente (2, 3, 4) ein- oder auszupumpen, dafür eingerichtet sind, das Fluid zwischen der wenigstens einen in Schalenbauweise hergestellten Komponente und wenigstens einer weiteren, insbesondere einer stationären Komponente des Wellenenergiekonverter (1) umzupumpen.

10. Verfahren zum Betreiben eines Wellenenergiekonverters (1) nach einem der Ansprüche 1 bis 9, das umfasst, wenigstens einen Wellenzustand in einem Gewässer, in dem der Wellenenergiekonverter (1) angeordnet ist, zu ermitteln und/oder zu prognostizieren und auf Grundlage des ermittelten und/oder prognostizierten Wellenzustands eine mittlere Dichte wenigstens einer rotierenden Komponente eines Rotors (2, 3, 4) des Wellenenergiekonverters (1) einzustellen.

11. Verfahren nach Anspruch 10, das umfasst, bei einem als monochromatisch ermittelten und/oder prognostizierten Wellenzustand die mittlere Dichte der wenigstens einen rotierenden Komponente des Rotors (2, 3, 4) des Wellenenergiekonverters (1) zu erhöhen und/oder bei einem als polychromatisch ermittelten und/oder prognostizierten Wellenzustand zu verringern.

12. Verfahren nach Anspruch 11, das ferner umfasst, den Rotor durch Abbremsen und/oder Beschleunigen mit einer mittleren Rotationsgeschwindigkeit weitgehend synchron zu einer Wasserbewegung in dem Gewässer zu betreiben.

13. Steuereinrichtung für einen Wellenenergiekonverter (1) nach einem der Ansprüche 1 bis 9, die dafür eingerichtet ist, ein Verfahren nach einem der Ansprüche 10 bis 12 durchzuführen.
